# EUROPÄISCHE PATENTSCHRIFT

(11) **EP 2 991 495 B1**
(45) Veröffentlichungstag und Bekanntmachung des Hinweises auf die Patenterteilung: **28.11.2018**
(21) Anmeldenummer: 14729595.0
(22) Anmeldetag: 28.04.2014
(51) Int. Cl.: A22B 7/00

(54) **HÄNGEFÖRDERER FÜR SCHLACHTTIERE**
OVERHEAD CONVEYOR FOR SLAUGHTER ANIMALS
CONVOYEUR AERIEN POUR ANIMAUX D'ABATTOIR

(30) Priorität: 02.05.2013 DE 102013208050
(43) Veröffentlichungstag der Anmeldung: 09.03.2016
(73) Patentinhaber: Westfleisch SCE mit beschränkter Haftung, 48183 Münster (DE)
(72) Erfinder: LEDING, Christian, 48165 Münster (DE); PIER, Holger, 48163 Münster (DE)
(74) Vertreter: Linnemann, Winfried
(86) Internationale Anmeldenummer: PCT/EP2014/058602
(87) Internationale Veröffentlichungsnummer: WO 2014/177516

(56) Entgegenhaltungen:
- FR-A1- 2 662 429
- FR-A1- 2 746 777
- JP-A- S57 131 612
- US-A- 3 051 011
- US-B1- 6 244 425

## Beschreibung

Die Erfindung betrifft einen Hängeförderer für Schlachttiere, mit Haken zum Aufhängen der Schlachttiere, mit einer Tragbahn, an der die Haken verschiebbar getragen und geführt sind, und mit einem parallel zur Tragbahn geführten antreibbaren, endlosen Fördermittel, an dem voneinander beabstandet Mitnehmer zum fördernden Mitnehmen der Haken angeordnet sind.

Hängeförderer der vorgenannten Art werden vielfach in Schlachthöfen und fleischverarbeitenden Betrieben eingesetzt, um geschlachtete und zu verarbeitende Tiere oder Tierteile hängend zu transportieren. Bekannt ist ein derartiger Hängeförderer beispielsweise aus der DE 41 38 467 A1. Die Tragbahn für die Haken ist dabei üblicherweise eine Rohrbahn, auf der die Haken gleitend verschiebbar sind. Als Förderer sind Ketten üblich, in die Mitnehmerwagen eingefügt sind, die an einer Laufschiene geführt sind und die Mitnehmer aufweisen, welche mit den Haken in diese mitnehmenden, fördernden Kontakt treten.

Das Dokument FR 2 746 777 A1 zeigt einen Hängeförderer, der eine Rollbahn aus zwei einander zugewandten L-Profilen, auf der Rollbahn mittels Rollen verfahrbare Wagen, eine über der Rollbahn verlaufende Gliederkette als Fördermittel und an der Gliederkette angeordnete, die Wagen schiebende Anschläge aufweist.

Das Dokument JP S57 131 612 A zeigt eine Art Paternoster-Förderer mit vertikal verlaufenden Fördermitteln in Form zweier parallel umlaufender endloser Seile. Die von dem Förderer geförderten Gegenstände sind rahmenartige Transportgestelle, die jeweils an ihrer Oberkante gelenkig, aber dauerhaft, mit Armen zweier einander gegenüberliegend an den Seilen angebrachter Klemmkörper verbunden sind. Somit hängen die Transportgestelle pendelnd an den Klemmkörpern und Seilen nach unten, auch wenn die Seile mit den daran hängenden Transportgestellen über die oberen und unteren Umlenkrollen laufen, wie insbesondere die Figuren 8 und 9 dieses Dokuments zeigen. Die Transportgestelle dieses Förderers sind im Betrieb nicht von den Seilen trennbar.

Als nachteilig wird bei den bekannten Hängeförderern angesehen, dass deren Förderketten schwer sind und entsprechend stabile Laufschienen sowie im Betrieb hohe Antriebskräfte erfordern. Zudem müssen die Förderketten zur Verminderung von Reibung und Verschleiß stets gut gefettet werden, wobei dennoch in der Praxis nur eine relativ kurze Einsatzzeit der Förderkette erreicht wird, bevor sie durch eine neue Kette ersetzt werden muss. Außerdem kommt es nachteilig vor, dass von der Förderkette herabtropfendes Schmierfett auf transportierte Tierkörper fällt und diese verunreinigt. Mit diesem letztgenannten Problem befasst sich zwar die erste vorgenannte Schrift zum Stand der Technik schon, jedoch ist die dort vorgeschlagene Lösung eine den Herstellungsaufwand und das Gewicht der Laufschiene noch erhöhende, nach unten geschlossene Rinne für die Förderkette und die Mitnehmerwagen.

Für die vorliegende Erfindung stellt sich daher die Aufgabe, einen Hängeförderer der eingangs genannten Art zu schaffen, welcher die angegebenen Nachteile vermeidet und der insbesondere einen verminderten konstruktiven Aufwand, einen geringeren Antriebskraftbedarf, eine längere Haltbarkeit und weniger Wartungsaufwand erfordert, also sowohl geringere Investitionskosten als auch niedrigere Betriebskosten verursacht.

Die Lösung der Aufgabe gelingt erfindungsgemäß mit einem Hängeförderer der eingangs genannten Art, der dadurch gekennzeichnet ist, dass das Fördermittel ein Seil ist, dass die Mitnehmer jeweils wenigstens einen in Richtung zur Tragbahn weisenden Mitnehmerarm aufweisen und dass in Förderabschnitten des das Fördermittel bildenden Seils durch Zwangsführungsmittel die Mitnehmer so führbar sind, dass deren Mitnehmerarm jeweils in einer zur Tragbahn weisenden Richtung ausgerichtet wird.

Ein Seil als Fördermittel des Hängeförderers hat gleich mehrere Vorteile: es benötigt als gespanntes, umlaufendes Seil keine Laufschiene, was den konstruktiven Aufwand und damit die Investitionskosten reduziert; es hat ein wesentlich geringeres Gewicht als eine Förderkette für den gleichen Zweck, was den Antriebskraftbedarf und damit den Energieverbrauch im Betrieb vermindert; es braucht keine Schmierung und weist dennoch einen sehr geringen Verschleiß auf, was einen wartungsarmen und über lange Zeit störungsfreien Betrieb gewährleistet. Vorteilhaft kann dabei über den Mitnehmerarm jeweils ein Haken, der ein Tier trägt oder leer ist, mittels des umlaufenden Seils als Fördermittel entlang der Tragbahn verschoben werden. Dort, wo es technisch notwendig ist, werden die Mitnehmerarme zwangsweise in die betrieblich erforderliche Richtung gebracht und in dieser gehalten.

Obwohl Hängeförderer mit einer Kette als Fördermittel schon seit vielen Jahrzehnten bekannt und im Einsatz sind, wurde bisher ein Seil als Fördermittel in Hängeförderern noch nicht vorgeschlagen, was auf ein lange bestehendes technische Vorurteil in der Fachwelt schließen lässt, das mit der Erfindung überwunden wird.

Konkret können die Zwangsführungsmittel z. B. zwei am Anfang eines Förderabschnitts von einem großen Abstand ausgehend aufeinander zu laufende Führungsstreben sein, die dann entlang des Förderabschnitts parallel zueinander mit einem solchen Abstand verlaufen, dass die Mitnehmerarme zur Tragbahn ausgerichtet sieh mit einem nötigen Bewegungsspiel zwischen den parallelen Führungsstreben hindurch bewegbar sind, ohne sich um die Längsachse des das Fördermittel bildenden Seils verschwenken zu können.

Weiter ist bevorzugt vorgesehen, dass die Tragbahn für die Haken eine Rohrbahn ist, auf der die Haken gleitend verschiebbar sind.

Damit der Hängeförderer den in der Praxis auftretenden Belastungen dauerhaft standhalten kann, ist bevorzugt vorgesehen, dass das das Fördermittel bildende Seil ein Stahlseil ist. Alternativ ist auch ein Seil aus Kohlenstofffasern oder aus Aramid einsetzbar, das noch wesentlich leichter, aber auch teurer als ein Stahlseil ist.

Um das Seil durch die daran angeordneten Mitnehmer nicht zu schädigen, aber gleichzeitig einen sicheren Halt der Mitnehmer am Seil zu gewährleisten, sind zweckmäßig die Mitnehmer an dem das Fördermittel bildenden Seil klemmend angebracht. Konkret kann dies beispielsweise durch Schraubklemmen oder Quetschhülsen realisiert sein.

Da im Betrieb des Hängeförderer das endlos umlaufende Seil als Fördermittel angetrieben werden muss und unter für die Lastaufnahme ausreichender Zugspannung gehalten werden muss, ist vorgesehen, dass das das Fördermittel bildende Seil über mindestens zwei Umlenkrollen und mindestens eine antreibbare Antriebsrolle und mindestens eine Spannrolle geführt ist.

Um den Aufwand an einzusetzenden Rollen gering zu halten, kann bei dem Hängeförderer wenigstens eine der Umlenkrollen zugleich eine/die Antriebsrolle sein.

Aus dem gleichen Grund kann wenigstens eine der Umlenkrollen zugleich eine/die Spannrolle sein.

Bevorzugt ist für den Hängeförderer weiter vorgesehen, dass die Rollen, über die das das Fördermittel bildende Seil geführt ist, horizontale Drehachsen aufweisen. Die Anordnung aus dem Seil als Fördermittel und den Rollen ist also in einer vertikalen oder zumindest im Wesentlichen vertikalen Ebene angeordnet. Somit kann ein Untertrum des Seils entlang des Förderabschnitts oder der Förderabschnitte des Hängeförderers verlaufen und dort mittels der Mitnehmer die Haken auf der Tragbahn verschieben, während ein Obertrum des Seils nur zu dessen Rücklauf dient, ohne dass hier Haken verschoben werden.

Eine weitere Ausgestaltung der Hängeförderer sieht schließlich vor, dass einem/ jedem Förderabschnitt des Hängeförderers am Förderabschnittsanfang ein Hakenaufgleiter und am Förderabschnittsende ein Hakenabgleiter zugeordnet ist. Hakenaufgleiter und Hakenabgleiter sind von konventionellen Hängeförderern an sich bekannt und können mit entsprechender technischer Anpassung auch an dem erfindungsgemäßen Hängeförderer eingesetzt werden. Hiermit werden am Förderstreckenanfang Haken von einem vorgeschalteten anderen Förderer auf den Hängeförderer überführt, beispielsweise über eine gleitend durchlaufene Gefällestrecke. Entsprechend können am Förderstreckenende die Haken vom Hängeförderer an einen nachgeschalteten anderen Förderer übergeben werden.

Technisch ist es auch denkbar, dass die verschiedenen Rollen, über die das Seil als Fördermittel geführt ist, vertikale Drehachsen aufweisen, wobei es dann möglich wird, dass die Haken über den gesamten Umlauf des Seils an diesem verbleiben können. Zur Lastaufnahme sind dann zusätzliche Rollen mit horizontaler Drehachse als Unterstützung für das Seil zweckmäßig, um ein Abspringen des Seils von den Rollen mit vertikaler Drehachse sicher zu vermeiden.

Ein Ausführungsbeispiel der Erfindung wird im Folgenden anhand einer Zeichnung erläutert. Die Figuren der Zeichnung zeigen:
- Figur 1: einen Hängeförderer anhand eines Ausschnitts in Seitenansicht und
- Figur 2: den Hängeförderer aus Figur 1 im Querschnitt.

In den Figuren der Zeichnung sind gleiche Teile stets mit den gleichen Bezugsziffern versehen, so dass nicht zu jeder Zeichnungsfigur alle Bezugszeichen neu erläutert werden müssen.

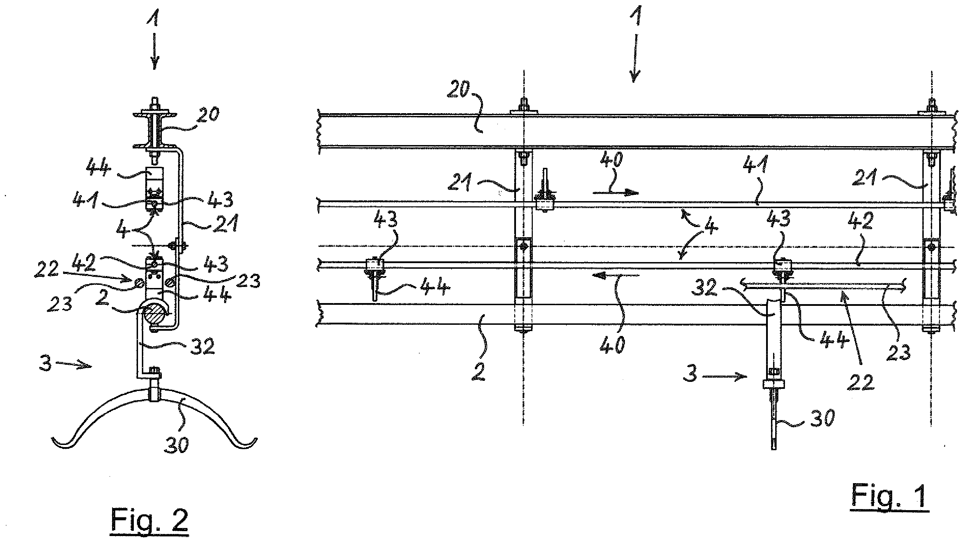

In Figur 1 ist ein Ausführungsbeispiel eines Hängeförderers 1 anhand eines Ausschnitts daraus in Seitenansicht dargestellt. Ganz oben in Figur 1 verläuft in horizontaler Richtung ein Tragbahnträger 20, hier in Form eines Doppel-T-Profils. Der Tragbahnträger 20 ist in hier nicht dargestellter Weise über geeignete Mittel beispielsweise an der Decke eines Gebäudes, wie Schlachthof, befestigt. In Abständen sind mit dem Tragbahnträger 20 nach unten vorragende Tragarme 21 verbunden, die mit ihrem unteren Ende eine parallel zu dem Tragbahnträger 20 verlaufende Tragbahn 2, hier eine Rohrbahn, tragen.

Auf der Tragbahn 2 sind Haken 3 verschieblich geführt, die in ihrem oberen Teil einen Tragbügel 32 und ihrem unteren Teil eine Spreize 30 aufweisen. Der Tragbügel 32 besitzt ein umgebogenes oberes Ende, wobei dessen Biegung an die Form der Tragbahn 2 angepasst ist.

Parallel zu dem Tragbahnträger 20 und der Tragbahn 2 verläuft ein Fördermittel 4 in Form eines Seils. Das das Fördermittel 4 bildende Seil besitzt ein Obertrum 41 und ein Untertrum 42 und ist endlos umlaufend sowie in Laufrichtung 40 antreibbar ausgeführt. An in Figur 1 nicht sichtbaren Endbereichen des Hängeförderers 1 sind Umlenkrollen angeordnet, über die das das Fördermittel 4 bildende Seil umgelenkt sowie zweckmäßig auch gespannt und angetrieben wird.

An dem Fördermittel 4 sind in regelmäßigen Abständen Mitnehmer 43 angebracht, die jeweils einen senkrecht zur Längsrichtung des Fördermittels 4 von diesem weg weisenden Mitnehmerarm 44 aufweisen. Im Bereich des Untertrums 42 des Fördermittels 4 weisen die Mitnehmerarme 44 in Richtung zur Tragbahn 2 und können dort, wie rechts in Figur 1 beispielhaft gezeigt, in fördernde Anlage an jeweils einen Haken 3 treten. In Förderabschnitten des das Fördermittel 4 bildenden Seils sind die Mitnehmer 43 durch Zwangsführungsmittel 22 so führbar, dass deren Mitnehmerarm 44 jeweils in einer zur Tragbahn 2 weisenden Richtung ausgerichtet wird. Die Zwangsführungsmittel 22 sind hier zwei Führungsstreben 23, die entlang des Förderabschnitts parallel zueinander mit einem solchen Abstand verlaufen, dass die Mitnehmerarme 44 zur Tragbahn 2 ausgerichtet sich mit einem nötigen Bewegungsspiel zwischen den parallelen Führungsstreben 23 hindurch bewegen können, ohne sich aber um die Längsachse des das Fördermittel 4 bildenden Seils verschwenken zu können. Durch Bewegung des Fördermittels 4 in Laufrichtung 40 wird dann der Haken 3 vom Mitnehmer 43 entlang der Tragbahn 2 verschoben. Dabei kann der Haken 3 leer sein oder es kann an dessen Spreize 30 ein Schlachttier aufgehängt sein.

In Figur 2 ist der Hängeförderer 1 aus Figur 1 in einem Querschnitt gezeigt. Ganz oben in Figur 2 ist der Tragbahnträger 20 sichtbar, von dem einer der Tragarme 21 nach unten verläuft. In der Blickrichtung gemäß Figur 2 ist deutlich erkennbar, dass der Tragarm 21 C-förmig ausgeführt ist und dass er die von ihm getragene Tragbahn 2 an deren Unterseite unterstützt. Somit bleibt die Oberseite der Tragbahn 2 durchgehend glattflächig für den gleitenden Transport der darauf verschiebbaren Haken 3. Einer der Haken 3 ist unten in Figur 2 sichtbar. Dabei wird hier das umgebogene obere Ende des Tragbügels 32 des Hakens 3 und dessen Formanpassung an die Querschnittsform der Tragbahn 2 deutlich erkennbar. Am unteren Ende des Tragbügels 32 ist die Spreize 30 angebracht, die um eine vertikale Achse relativ zu dem Tragbügel 32 verdrehbar sein kann.

Zwischen dem Tragbahnträger 20 und der Tragbahn 2 verläuft parallel zu diesen das Fördermittel 4 in Form des Seils mit seinem Obertrum 41 und Untertrum 42. Mit dem das Fördermittel 4 bildenden Seil sind die Mitnehmer 43 verbunden, hier durch Schraubklemmen, die bei Bedarf lösbar sind, um Mitnehmer 43 auszutauschen oder entlang des Fördermittels 4 zu versetzen. Im Bereich des Untertrums 42 des Fördermittels 4 weist der an jedem Mitnehmer 43 vorgesehene Mitnehmerarm 44 in Richtung zur Tragbahn 2 und tritt dort im Betrieb des Hängeförderers 1 in fördernde Anlage an einem der Haken 3. Durch die Zwangsführungsmittel 22 in Form der zwei Führungsstreben 23 sind die Mitnehmer 43 so geführt, dass deren Mitnehmerarm 44 jeweils in einer zur Tragbahn 2 weisenden Richtung ausgerichtet wird. Die zwei Führungsstreben 23 verlaufen parallel zueinander mit einem solchen Abstand, dass die Mitnehmerarme 44 zur Tragbahn 2 ausgerichtet sich mit einem nötigen Bewegungsspiel zwischen den parallelen Führungsstreben 23 hindurch bewegen können, ohne sich aber um die Längsachse des das Fördermittel 4 bildenden Seils verschwenken zu können. Im Bereich des Obertrums 41 des das Fördermittel 4 bildenden Seils weisen die Mitnehmerarme 44 nach oben.

**Bezugszeichenliste:**

| Zeichen | Bezeichnung |
|---|---|
| | |
| 1 | Hängeförderer |
| | |
| 2 | Tragbahn |
| 20 | Tragbahnträger |
| 21 | Tragarme |
| 22 | Zwangsführungsmittel |
| 23 | Führungsstreben |
| | |
| 3 | Haken |
| 30 | Spreize |
| 32 | Tragbügel |
| | |
| 4 | Fördermittel (Seil) |
| 40 | Laufrichtung |
| 41 | Obertrum |
| 42 | Untertrum |
| 43 | Mitnehmer |
| 44 | Mitnehmerarm |

## Patentansprüche

1. Hängeförderer (1) für Schlachttiere, mit Haken (3) zum Aufhängen der Schlachttiere, mit einer Tragbahn (2), an der die Haken (3) verschiebbar getragen und geführt sind, und mit einem parallel zur Tragbahn (2) geführten antreibbaren, endlosen Fördermittel (4), an dem voneinander beabstandet Mitnehmer (43) zum fördernden Mitnehmen der Haken (3) angeordnet sind, **dadurch gekennzeichnet,**
**dass** das Fördermittel (4) ein Seil ist,
**dass** die Mitnehmer (43) jeweils wenigstens einen in Richtung zur Tragbahn (2) weisenden Mitnehmerarm (44) aufweisen und
**dass** in Förderabschnitten des das Fördermittel (4) bildenden Seils die Mitnehmer (43) durch Zwangsführungsmittel (22) so führbar sind, dass deren Mitnehmerarm (44) jeweils in einer zur Tragbahn (2) weisenden Richtung ausgerichtet wird.

2. Hängeförderer nach Anspruch 1, **dadurch gekennzeichnet, dass** die Zwangsführungsmittel (22) zwei am Anfang eines Förderabschnitts von einem großen Abstand ausgehend aufeinander zu laufende Führungsstreben (23) sind, die dann entlang des Förderabschnitts parallel zueinander mit einem solchen Abstand verlaufen, dass die Mitnehmerarme (44) zur Tragbahn (2) ausgerichtet mit einem nötigen Bewegungsspiel zwischen den parallelen Führungsstreben (23) hindurch bewegbar sind, ohne sich um die Längsachse des das Fördermittel (4) bildenden Seils verschwenken zu können.

3. Hängeförderer nach Anspruch 1, **dadurch gekennzeichnet, dass** die Tragbahn (2) für die Haken (3) eine Rohrbahn ist, auf der die Haken (3) gleitend verschiebbar sind.

4. Hängeförderer nach einem der Ansprüche 1 bis 3, **dadurch gekennzeichnet, dass** das das Fördermittel (4) bildende Seil ein Stahlseil ist.

5. Hängeförderer nach einem der Ansprüche 1 bis 4, **dadurch gekennzeichnet, dass** die Mitnehmer (43) an dem das Fördermittel (4) bildenden Seil klemmend angebracht sind.

6. Hängeförderer nach einem der Ansprüche 1 bis 5, **dadurch gekennzeichnet, dass** das das Fördermittel (4) bildende Seil über mindestens zwei Umlenkrollen und mindestens eine antreibbare Antriebsrolle und mindestens eine Spannrolle geführt ist.

7. Hängeförderer nach Anspruch 6, **dadurch gekennzeichnet, dass** wenigstens eine der Umlenkrollen zugleich eine/die Antriebsrolle ist.

8. Hängeförderer nach Anspruch 6 oder 7, **dadurch gekennzeichnet, dass** wenigstens eine der Umlenkrollen zugleich eine/die Spannrolle ist.

9. Hängeförderer nach einem der Ansprüche 1 bis 8, **dadurch gekennzeichnet, dass** die Rollen, über die das das Fördermittel (4) bildende Seil geführt ist, horizontale Drehachsen aufweisen.

10. Hängeförderer nach einem der Ansprüche 1 bis 9, **dadurch gekennzeichnet, dass** einem/jedem Förderabschnitt des Hängeförderers (1) am Förderabschnittsanfang ein Hakenaufgleiter und am Förderabschnittsende ein Hakenabgleiter zugeordnet ist.

## Claims

1. Overhead conveyor (1) for slaughter animals, comprising hooks (3) for suspending the slaughter animals, a transport rail (2) on which the hooks (3) are slidably carried and guided, and an endless, driveable conveyor means (4) guided parallel to the transport rail (2) and having carrier dogs (43) arranged thereupon in spaced relationship to one another for the conveying carriage of the hooks (3),
**characterised in**
**that** the conveyor means (4) is a cable,
**that** the carrier dogs (43) each have at least one bracket (44) oriented towards the transport rail (2), and
**that** in the conveying sections of the cable that forms the conveyor means (4) the carrier dogs (43) are adapted to be guided by forced-guiding means (22) in such a manner that their bracket (44) is oriented towards the transport rail (2).

2. The overhead conveyor according to Claim 1, **characterised in that** the forced-guidance means (22) are comprised of two guide struts (23) initially spaced widely apart at the beginning of a conveyor section and converging towards one another, then running parallel to one another along the conveyor section at such a distance apart that the brackets (44), being in alignment with the transport rail (2), have the necessary amount of play for being moved between and through the parallel guide struts (23), without being able to swing around the longitudinal axis of the cable forming the conveyor means (4).

3. The overhead conveyor according to Claim 1, **characterised in that** the transport rail (2) for the hooks (3) is a tubular track on which the hooks (3) are slidingly movable.

4. The overhead conveyor according to one of Claims 1 to 3, **characterised in that** the cable forming the conveyor means (4) is a steel cable.

5. The overhead conveyor according to one of Claims 1 to 4, **characterised in that** the carrier dogs (43) are clamped on to the cable forming the conveyor means (4).

6. The overhead conveyor according to one of Claims 1 to 5, **characterised in that** the cable forming the conveyor means (4) is guided over at least two deflection rollers and at least one drivable drive roller and at least one tensioning roller.

7. The overhead conveyor according to Claim 6, **characterised in that** at least one of the deflection rollers is also a/the drive roller.

8. The overhead conveyor according to Claim 6 or 7, **characterised in that** at least one of the deflection rollers is also a/the tensioning roller.

9. The overhead conveyor according to one of Claims 1 to 8, **characterised in that** the rollers over which the cable forming the conveyor means (4) is guided have horizontal axes of rotation.

10. The overhead conveyor according to one of Claims 1 to 9, **characterised in that** a hook pickup at the beginning of the conveyor section and a hook release at the end of the conveyor section is associated with a/every conveyor section of the overhead conveyor (1).

## Revendications

1. Convoyeur aérien (1) pour animaux d'abattoir, doté de crochets (3) pour suspendre les animaux d'abattoir, d'une voie porteuse (2) sur laquelle les crochets (3) susceptibles de coulisser sont portés et conduits, et d'un moyen de convoyage (4) infini, susceptible d'être entraîné et conduit à la parallèle de la voie porteuse (2), sur lequel sont agencés des entraîneurs (43), espacés les uns des autres, pour entraîner en convoyage les crochets (3), **caractérisé en ce**
**que** le moyen de convoyage (4) est un câble,
**que** les entraîneurs (43) présentent chacun au moins un bras d'entraînement (44) tourné vers la voie porteuse (2), et
**que** dans des tronçons de convoyage du câble formant le moyen de convoyage (4), les entraîneurs (43) sont susceptibles d'être guidés par moyens de guidage forcé (22) de telle manière que leur bras d'entraînement (44) est respectivement orienté dans une direction tournée vers la voie porteuse (2).

2. Convoyeur aérien selon la revendication 1, **caractérisé en ce que** les moyens de guidage forcé (22) sont deux barres de guidage (23) allant l'une vers l'autre au début d'un tronçon de convoyage, à partir d'une grande distance d'écartement, lesquelles barres de guidage s'étendent le long du tronçon de convoyage parallèlement l'une à l'autre à une telle distance que les bras d'entraînement (44), orientés vers la voie porteuse (2), sont susceptibles d'être déplacés avec un jeu de mouvement nécessaire pour passer entre les barres de guidage (23) parallèles sans pouvoir se basculer autour de l'axe longitudinal du câble formant le moyen de convoyage (4).

3. Convoyeur aérien selon la revendication 1, **caractérisé en ce que** la voie porteuse (2) pour les crochets (3) est une voie tubulaire sur laquelle les crochets (3) sont susceptibles de coulisser par glissement.

4. Convoyeur aérien selon l'une quelconque des revendications 1 à 3, **caractérisé en ce que** le câble formant le moyen de convoyage (4) est un câble en acier.

5. Convoyeur aérien selon l'une quelconque des revendications 1 à 4, **caractérisé en ce que** les entraîneurs (43) sont fixés par serrage sur le câble formant le moyen de convoyage (4).

6. Convoyeur aérien selon l'une quelconque des revendications 1 à 5, **caractérisé en ce que** le câble formant le moyen de convoyage (4) est guidé en passant par au moins deux poulies de renvoi et au moins une poulie d'entraînement et au moins une poulie de tension.

7. Convoyeur aérien selon la revendication 6, **caractérisé en ce qu'**au moins une des poulies de renvoi est à la fois une/la poulie d'entraînement.

8. Convoyeur aérien selon la revendication 6 ou 7, **caractérisé en ce qu'**au moins une des poulies de renvoi est à la fois une/la poulie de tension.

9. Convoyeur aérien selon l'une quelconque des revendications 1 à 8, **caractérisé en ce que** les poulies par-dessus lesquelles passe le câble formant le moyen de convoyage (4) présentent des axes de rotation horizontaux.

10. Convoyeur aérien selon l'une quelconque des revendications 1 à 9, **caractérisé en ce que** sont associés à un/chacun des tronçons de convoyage du convoyeur aérien (1), au début du tronçon de convoyage, un patin d'accrochage de crochet et au bout du tronçon de convoyage, un patin de décrochage de crochet.
